# EUROPEAN PATENT SPECIFICATION

(11) **EP 1 881 658 B1**
(45) Date of publication and mention of the grant of the patent: **09.07.2008**
(21) Application number: 06117626.9
(22) Date of filing: 21.07.2006
(51) Int. Cl.: H04L 12/58, H04L 1/16

(54) **Method and device for handling notifications in instant messaging systems**
Verfahren und Vorrichtung zur Handhabung von Meldungen in sofortigen Nachrichtensystemen
Procédé et dispositif de traitement de notifications dans des systèmes de messagerie instantanée

(43) Date of publication of application: 23.01.2008
(73) Proprietor: Research In Motion Limited, Waterloo, Ontario N2L 3W8 (CA)
(72) Inventor: Klassen, Gerhard D, Waterloo, Ontario N2T 1H7 (CA)
(74) Representative: Rickard, David John

(56) References cited:
- US-A1- 2002 026 483
- ISOMAKI M ET AL: "Advanced Instant Messaging Requirements for the Session Initiation Protocol (SIP)" IETF STANDARD-WORKING-DRAFT, INTERNET ENGINEERING TASK FORCE, IETF, CH, vol. simple, 22 June 2006 (2006-06-22), XP015045939 ISSN: 0000-0004
- SANGMI LEE ET AL: "Wireless reliable messaging protocol for web services (WS-WRM)" WEB SERVICES, 2004. PROCEEDINGS. IEEE INTERNATIONAL CONFERENCE ON SAN DIEGO, CA, USA 6-9 JULY 2004, PISCATAWAY, NJ, USA,IEEE, 6 July 2004 (2004-07-06), pages 350-357, XP010709175 ISBN: 0-7695-2167-3

## Description

Instant messages are short text messages with no subject and no attachments sent directly from terminal to terminal within an instant messaging (IM) community. The messages are generally displayed to the user as part of a conversation. A member of an instant messaging (IM) community has a unique identifier ("contact name") in that community and can be added to the contact list of another member of the community using that identifier. For example, SMS is available only within the community of mobile telephone users, and the unique identifier is the telephone number.

A user receiving an IM message to his communication device may type and send a response to the message. However, it may take some time for the user to notice the received message, to read it and to type and send the response. If the user is not available to receive the message, the sender of the message may wait a long time for a response before realizing that the user has not participated in the conversation.

Some IM systems use notifications to provide users with "clues" about the status of a conversation. For example, a *Message_Delivered* notification may be used to notify a sender of a message that the message was received by the target communication device. In another example, a *Message_Read* notification may be used to notify a sender of a message that the message was read by a user of the target communication device. In yet another example, *Typing_Started* and *Typing_Stopped* messages may be used to notify a sender of a message when a user of the target communication device is typing a response to the message.

Notifications sent in an IM system occupy bandwidth that would otherwise be available for other communications.

### GENERAL

One problem to be solved is that notifications sent in an IM system occupy bandwidth that would otherwise be available for other communications. The various notifications may include one or more of *Message_Delivered, Message_Read, Typing_Started* and *Typing_Stopped.* A solution is to reduce the communications in an IM conversation between two devices. Embodiments of the invention also seek to mitigate other problems of known IM systems by providing a more efficient IM system.

This may be accomplished by a method in which two or more IM events of the conversation at the first device are confirmed by sending to the second device a single IM communication that confirms the most recent of the events. In order that the user of the second device not experience undue delay in receiving the confirmation, the method may be applied where the time interval between any two consecutive ones of the events is less than a predetermined time. The predetermined time may be configurable to the behavioral pattern of the user of the first device, or to any other parameters, in order to balance between giving the user of the first device enough time to respond and delaying the notifications for too long. The predetermined time may be, for example, in the range of approximately 5 seconds to approximately 10 seconds.

In some cases, an earlier event can be inferred from the single IM communication. For example, the first device may delay sending a *Typing_Started* (and/or *Typing_Stopped)* notification for a brief period of time and may avoid sending the *Typing_Started* (and/or *Typing_Stopped)* notification if the IM being typed is sent to the second device during that period of time, since the user of the second device receiving the IM can infer from the receipt of the IM that it was typed. This may occur, for example, with very short instant messages such as "OK". In such a scenario, the most recent of the events being confirmed is that an IM was sent by the first device to the second device, the single IM communication is the IM, and an earlier one of the events is the starting (or stopping) of input of the IM by a user of the first device.

In another example, the first device may delay sending a *Message_Delivered* notification for a particular IM for a brief period of time and may avoid sending the *Message-Delivered* notification if the user of the first device has read the particular IM during that period of time, since the user of the second device participating in the instant messaging conversation can infer from a *Message_Read* notification (or a combination notification that includes a *Message_Read* component) that the particular IM was indeed delivered. In such a scenario, the most recent of the events being confirmed is that an IM received from the second device was displayed on a display of the first device, the single IM communication is a notification that the IM was read, and an earlier one of the events is the receipt of the IM at the first device.

The second device, upon receipt from the first device of a *Message_Delivered* notification for a particular IM, may infer that all previous instant messages in the conversation that were sent by the second device to the first device have also been received by the first device. The second device may update its internal record to reflect that the particular IM and all messages of the conversation sent prior to the particular IM were delivered. In such a scenario, the most recent of the events to be confirmed is the receipt of an instant message, and earlier ones of the events are the receipt of previous instant messages in the conversation. Similarly, the second device, upon receipt from the first device of a *Message_Read* notification for a particular IM**,** may infer that all previous instant messages in the conversation that were sent by the second device to the first device have also been received by the first device and read by the user of the first device. The second device may update its internal record to reflect that the particular IM and all messages of the conversation sent prior to the particular IM were delivered and read. In such scenarios, the most recent of the events to be confirmed is the display of an instant message, and earlier ones of the events are the receipt and display of previous instant messages in the conversation.

The single IM communication may explicitly confirm one or more earlier ones of the events. For example, the first device may delay sending a *Message_Delivered* notification for a particular IM for a brief period of time. If a user of the first device starts typing another instant message during that period of time, then instead of sending separate *Message_Delivered, Message_Read* and *Typing_Started* notifications, the device may send a single combination notification about the particular IM having been read and typing having started. In such a scenario, the most recent of the events being confirmed is the starting of input of an instant message at the first device, and the earlier events include an instant message being received and displayed at the first device.

In another example, the first device may delay sending a *Message_Read* notification for a particular IM for a brief period of time. If the user of the first device starts typing another instant message during that period of time, then instead of sending separate *Message_Read* and *Typing_Started* notifications, the device may send a single combination notification about the particular IM having been read and typing having started. In such a scenario, the most recent of the events being confirmed is the starting of input of an instant message at the first device, and an earlier one of the events is the display of an instant message at the first device.

The single IM communication may include an IM and a notification of one or more of the events. For example, the first device may delay sending a *Message_Read* notification for a particular IM for a brief period of time. If the first device is ready to send an IM during that period of time, then instead of sending the ***Message_Read*** notification (and ***Typing_Started* and *Typing_Stopped*** notifications) and the instant message separately, the first device may send a single IM communication that is a combination message/notification that includes the IM composed at the first device and notifies that the particular IM was displayed at the first device. In such a scenario, an earlier one of the events is reception at the first device of an IM from the second device and the most recent of the events to be confirmed is the sending of another IM by the first device to the second device, and the single IM communication is the combination IM and notification of display.

US2002/0026483 discloses a system, method and apparatus for facilitating communication among a number of distributed clients in a distributed network. A user, such as through a personal digital assistant device, may select one or more instant messages for transmission to one or more other users in the network. The instant messages may be sound instant message and/or text instant messages. During messaging, message status indicators provide users with the status of their respective messages. In one embodiment, the messages may be deemed to be either pending or received as distinguished by a pending status indicator and a received status indicator. US2002/0026483 discloses in paragraph 0057 that once a message is received by a message recipient, the message recipient provides a message acknowledgement or ACK back to the message sender.

The European Classification system (ECLA) is used by the European Patent Office for carrying out patent application searches. European classification H04L1/16 is: Electricity (H), Electric communication Technique (H04), Transmission of digital information (H04L), arrangements for detecting or preventing errors in the information received (H04L1), by using return channel (H04L/12), in which the return channel carries supervisory signals, e.g. repetition request signals. Classification items H041/16F correspond to details of the supervisory signal. Classification items H041/16F7 corresponds to cumulative acknowledgement, i.e. the acknowledgement message applying to all previous messages. Classification items H041/16F13 corresponds to supervisory signals being transmitted together with payload signals.

"Advanced Instant Messaging Requirements for the Session Initiation protocol" by M. Isomaki and J. Rosenberg was published June 22, 2006. This document defines a set of requirements for instant messaging capabilities to be implemented in addition to the basic instant messaging service supported by the Session Initiation Protocol (SIP).

In a first main aspect, the invention provides a method in a first communication device for reducing communications in an instant messaging conversation between said first device and a second communication device, the method comprising: delaying sending to said second device a notification about an event at said first device related to an instant message of said instant messaging conversation; and if a communication related to said instant message is sent by said first device to said second device within a predetermined time after said event, not sending said notification to said second device.

In another main aspect, the invention provides a method in a first communication device for reducing communications in an instant messaging conversation between said first device and a second communication device, the method comprising: delaying sending to said second device a notification about a first event at said first device related to an instant message of said instant messaging conversation; and if a second event of said instant messaging conversation occurs at said first device within a predetermined time after said first event, sending in a single communication from said first device to said second device a notification of said first event and said second event, otherwise sending said notification about said first event to said second device in a communication that does not include a notification of said second event.

Other aspects of the invention will be apparent from the appended claims.

### BRIEF DESCRIPTION OF THE DRAWINGS

Embodiments are illustrated by way of example and not limitation in the figures of the accompanying drawings, in which like reference numerals indicate corresponding, analogous or similar elements, and in which:
Figure 1 is a simplified illustration of an exemplary communication system 100 used for instant messaging, according to some embodiments of the invention;
Figures 2 - 7 are a flowchart of an exemplary method implemented by an instant messaging client on a communication device receiving one or more IM messages, according to some embodiments of the invention;
Figure 8 is a flowchart of an exemplary method implemented by an instant messaging client on a communication device sending one or more IM messages, according to some embodiments of the invention; and
Figure 9 is a flowchart of an exemplary simplified method implemented by an instant messaging client on a communication device, according to some embodiments of the invention; and
Figure 10 is a simplified functional block diagram illustration of an exemplary device, according to some embodiments of the invention.

It will be appreciated that for simplicity and clarity of illustration, elements shown in the figures have not necessarily been drawn to scale. For example, the dimensions of some of the elements may be exaggerated relative to other elements for clarity.

### DESCRIPTION OF PREFERRED EMBODIMENTS

In the following detailed description, numerous specific details are set forth in order to provide a thorough understanding of embodiments. However it will be understood by those of ordinary skill in the art that the embodiments may be practiced without these specific details. In other instances, well-known methods, procedures, components and circuits have not been described in detail so as not to obscure the embodiments.

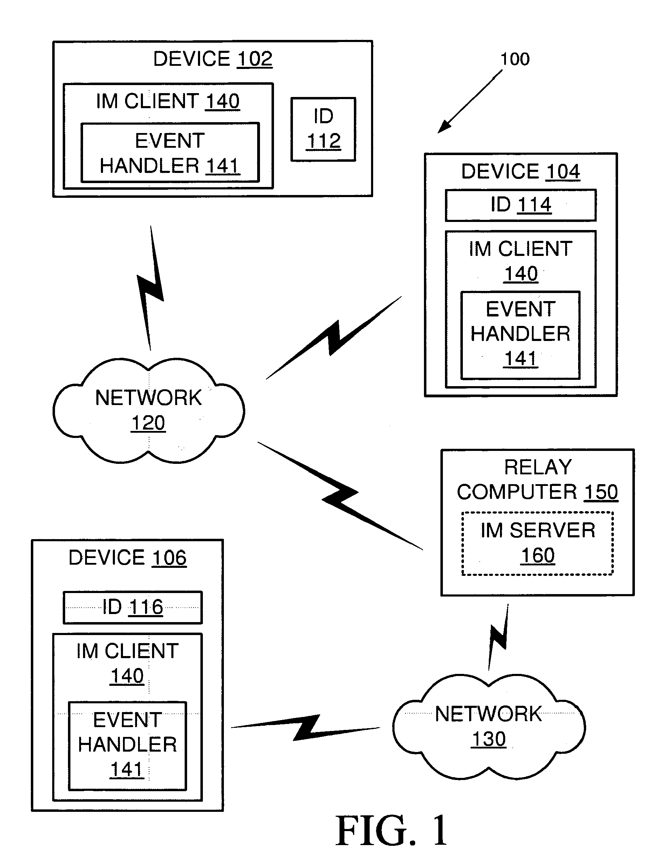

Figure 1 is a simplified illustration of an exemplary communication system 100 used for instant messaging (IM), according to some embodiments of the invention. System 100 includes devices 102, 104 and 106, respectively identified by identifiers 112, 114 and 116 in the instant messaging community. A non-exhaustive list of examples for devices 102, 104 and 106 includes workstations, notebook computers, laptop computers, desktop personal computers, personal digital assistants (PDAs), hand-held computers, cellular telephones, smart cellphones, electronic mail (Email) clients, programmable consumer electronics, network PCs, and the like.

Devices 102 and 104 communicate to each other and to other devices in the instant messaging community via a network 120, and device 106 communicates to other devices in the instant messaging community via a network 130. A non-exhaustive list of examples for networks 120 and 130 includes any or combination of:
a) wired networks such as the Internet, intranets, Ethernet networks, token rings, Universal Serial Bus (USB), wired networks according to the IEEE 1394-1995, IEEE 1394a-2000, and IEEE 1394b standards (commonly known as "FireWire"), or any combination thereof;
b) cellular networks such as Direct Sequence - Code Division Multiple Access (DS-CDMA) cellular radiotelephone communication, Global System for Mobile Communications (GSM) cellular radiotelephone, North American Digital Cellular (NADC) cellular radiotelephone, Time Division Multiple Access (TDMA), Extended-TDMA (E-TDMA) cellular radiotelephone, wideband CDMA (WCDMA), General Packet Radio Service (GPRS), Enhanced Data for GSM Evolution (EDGE), 3G and 4G communication, and the like; and
c) wireless local area networks such as IEEE 802.11, Bluetooth®, Zigbee^{™}, ultra wideband (UWB) and the like; and
d) optical communication networks.

Networks 120 and 130 may include any combination of additional communication devices (not shown) such as gateways, routers, switches, and the like.

An IM client 140 is installed on each of devices 102, 104 and 106. IM client 140 may be implemented in software, hardware, firmware or any combination thereof. IM client 140 may include an event handler 141. When the user of device 102 sends an instant message to the user of device 104, the instant message is handled by IM client 140 on device 102, communicated to network 120, communicated to a relay computer or computers 150, and passed back to network 120 for communication to device 104. When the user of device 106 sends an instant message to the user of device 104, the instant message is handled by IM client 140 on device 106, communicated to network 130, communicated to relay computer(s) 150, and passed to network 120 for communication to device 104.

An IM communication session between two communication devices is called a conversation. Messages that belong to the same conversation may include a common number identifying the conversation, and an identification number and/or a time stamp to identify each particular message in the conversation.

Relay computer(s) 150 identifies the contact through its unique identifier in the IM community and enables the instant message to be addressed to the appropriate device. If the instant message cannot be delivered to the contact's device, relay computer(s) 150 may store the instant message and attempt redelivery for a specified period of time, for example, 24 hours or 48 hours.

In some IM systems, an IM server 160 is incorporated into or coupled to relay computer(s) 150. In other IM systems, the IM functionality is enabled by IM clients 140 and no specific IM server is required.

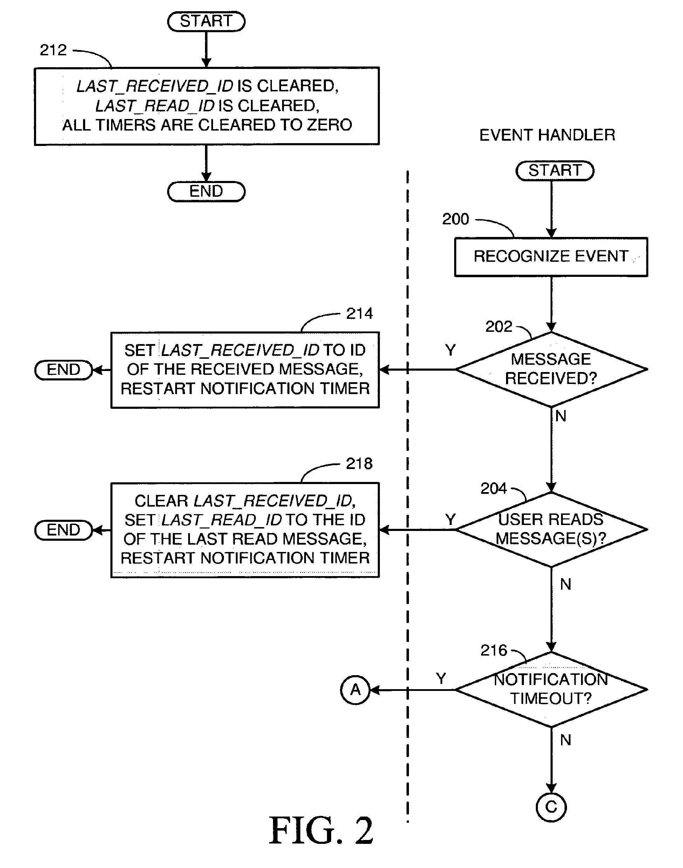

Figures 2-7 are a flowchart of an exemplary method implemented by IM client 140 on a communication device receiving one or more IM messages, for example device 102, according to some embodiments of the invention. At 200, IM client 140 recognizes that an event occurred. The recognized event may be reception of a message by device 102, an activation of device 102 that corresponds to the user reading a message, an activation of device 102 that corresponds to the user typing a message, an activation of device 102 that corresponds to the user exiting the conversation screen that includes the received message, and an activation of device 102 that corresponds to the user sending a message, as shown at 202, 204, 206, 208 and 210, respectively. IM client 140 may recognize other events that are explained hereinbelow.

A conversation may be assigned variables *Last_Received_ID, Last_Read_ID, Notification_Timer, Typing_Started_Timer* and *Typing_Stopped_Timer* that are cleared to zero at the beginning of the conversation, as shown at 212.

If event handler 141 recognizes at 202 reception of a message, then at 214, IM client 140 sets *Last_Received_ID* to the identification number of the received message, loads *Notification_Timer* with a value *Notification_Value,* and initiates decrementing of *Notification_Timer* at a constant rate. The constant rate and the value of *Notification_Value* determine the amount of time that will pass until *Notification_Timer* is decremented to zero. If *Notification_Timer* is decremented to zero, event handler 141 may recognize that event, as shown at 216.

If event handler 141 recognizes at 204 activation of device 102 that corresponds to the user reading one or more messages, then at 218 IM client 140 may clear *Last_Received_ID* to zero, may set *Last_Read_D* to the identification number of the last message being read, reload *Notification_Timer* with *Notification_Value,* and initiate decrementing of *Notification_Timer* at a constant rate. The last message is the message received last, or with the latest timestamp.

In some situations, reception of a message will also mean that the user has read the message. For example, if the conversation screen is active in device 102, the event handler 141 may assume that reception of a message signifies also that the user has read the message, even though there is no additional "activation" of device 102. In that case, event handler 141 will first handle the reception of the message as described above, and then will handle the "event" of the user reading the message as described above.

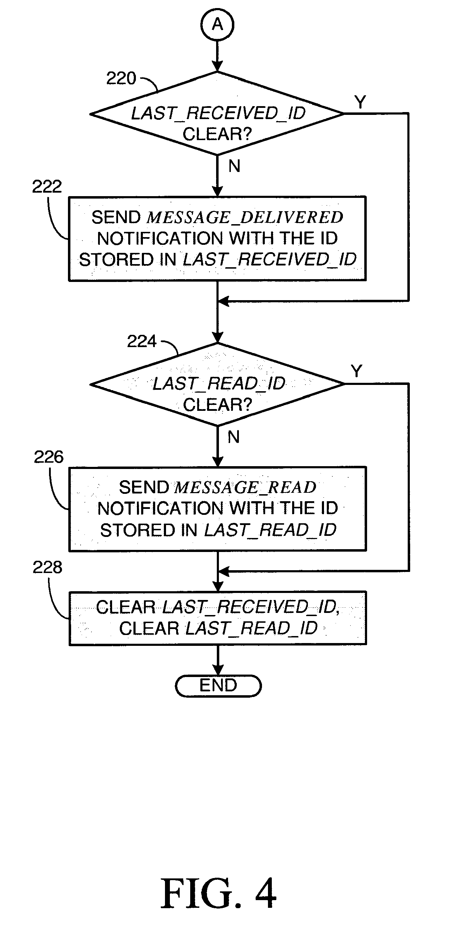

If event handler 141 recognizes at 216 that *Notification_Timer* is decremented to zero, the method continues to 220 at Figure 4. If *Last_Received_ID* contains an ID number of a message, then at 222 IM client 140 may send a *Message_Delivered* notification that includes the ID number that is stored in *Last_Received_ID.* At 224, IM client 140 checks whether *Last_Read_ID* contains an ID number of a message, and if so, then at 226 IM client 140 may send a *Message_Read* notification that includes the ID number that is stored in *Last_Read_ID.* At 228, ID client 140 clears *Last_Received_ID* and *Last_Read_ID* to zero.

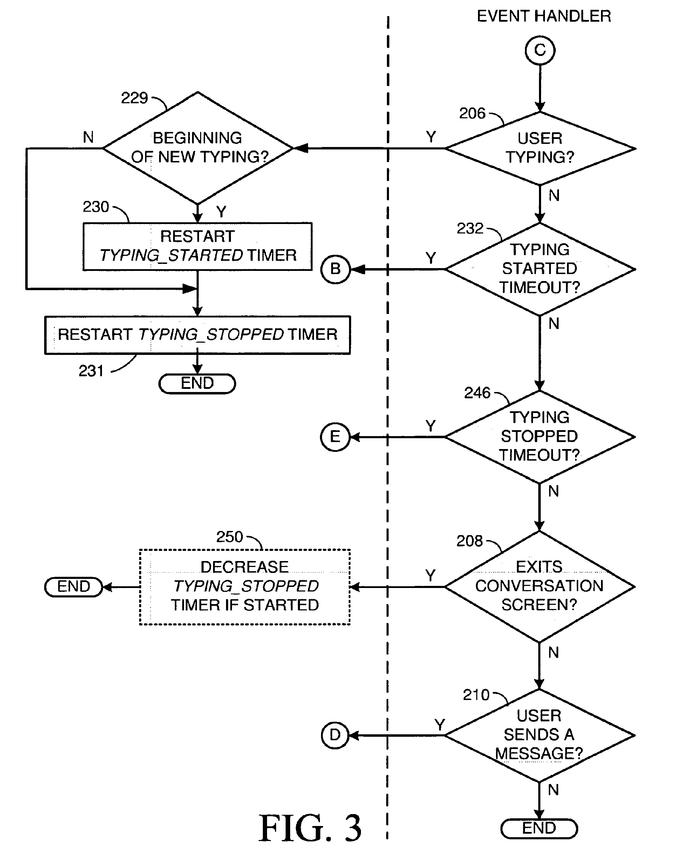

If event handler 141 recognizes at 206 of Figure 3 an activation of device 102 that corresponds to the user typing a message, then the method proceeds to 229. If IM client 140 detects at 229 that the user has started or restarted to type a message, then at 230, IM client 140 loads *Typing_Started_Timer* with a value *Typing_Started_Value,* and initiates decrementing of *Typing_Started_Timer* at a constant rate. IM client 140 may decide that the user has started or restarted to type a new message if the *Typing_Stopped_Timer* has been cleared to zero.

At 231, IM client 140 loads *Typing_Stopped_Timer* with a value *Typing_Stopped_Value,* and initiates decrementing of *Typing_Stopped_Timer* at a constant rate.

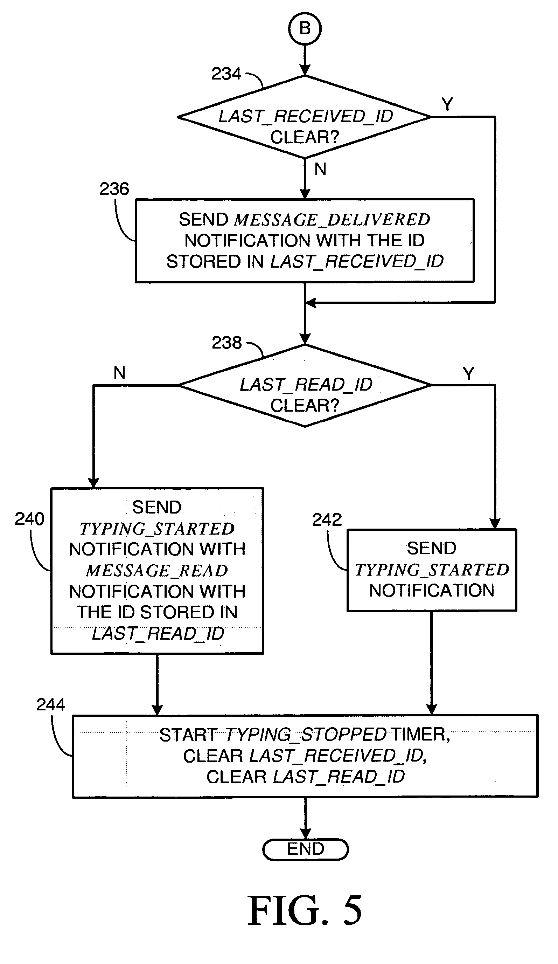

If event handler 141 recognizes at 232 that *Typing_Started_Timer* is decremented to zero, the method continues to 234 at Figure 5. If *Last_Received_ID* contains an ID number of a message, then at 236, IM client 140 may send a *Message_Delivered* notification including the ID number that is stored in *Last_Received_ID.* It is rather unlikely that *Last_Received_ID* will contain an ID number of a message at this point, since it is unlikely that the user of device 102 will have started typing without having read the most recently received message. At 238, IM client 140 checks whether *Last_Read_ID* contains an ID number of a message. If *Last_Read_ID* contains an ID number of a message, then at 240 IM client 140 may send a single notification that is a combination of a *Typing_Started* notification and of a *Message_Read* notification that includes the ID number that is stored in *Last_Read_ID.* If *Last_Read_ID* is cleared, at 242 IM client 140 may send just a *Typing_Started* notification. At 244, IM client 140 may clear *Last_Received_ID* and *Last_Read_ID* to zero, load *Typing_Stopped_Timer* with a value *Typing_Stopped_Value,* and initiate decrementing of *Typing_Stopped_Timer* at a constant rate.

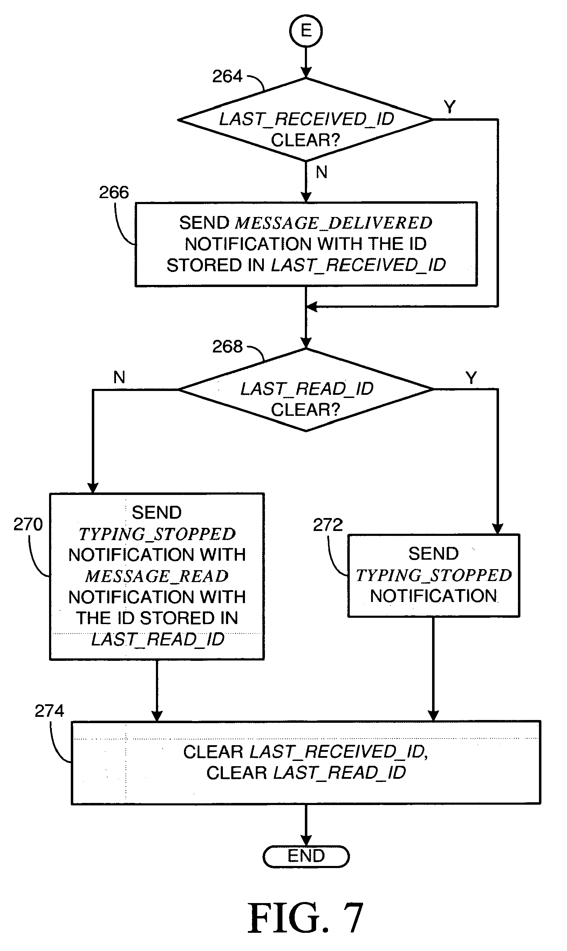

If event handler 141 recognizes at 246 in Figure 3 that *Typing_Stopped_Timer* is decremented to zero, the method continues to 264 at Figure 7. If *Last_Received_ID* contains an ID number of a message, then at 266, IM client 140 may send a *Message_Delivered* notification including the ID number that is stored in *Last_Received_ID.* It is rather unlikely that *Last_Received_ID* will contain an ID number of a message at this point, since it is unlikely that the user of device 102 will have stopped typing without having read the most recently received message. At 268, IM client 140 checks whether *Last_Read_ID* contains an ID number of a message. If *Last_Read_ID* contains an ID number of a message, then at 270 IM client 140 may send a single notification that is a combination of a *Typing_Stopped* notification and of a *Message_Read* notification that includes the ID number that is stored in *Last_Read_ID.* If *Last_Read_ID* is cleared, at 272 IM client 140 may send just a *Typing_Stopped* notification. At 274, IM client 140 may clear *Last_Received_ID* and *Last_Read_ID* to zero.

If event handler 141 recognizes at 208 an activation of device 102 that corresponds to the user exiting the conversation screen of the received message, then at 250, IM client 140 may optionally decrease the value currently in *Typing_Stopped_Timer* to shorten the time until *Typing_Stopped_Timer* is decremented to zero.

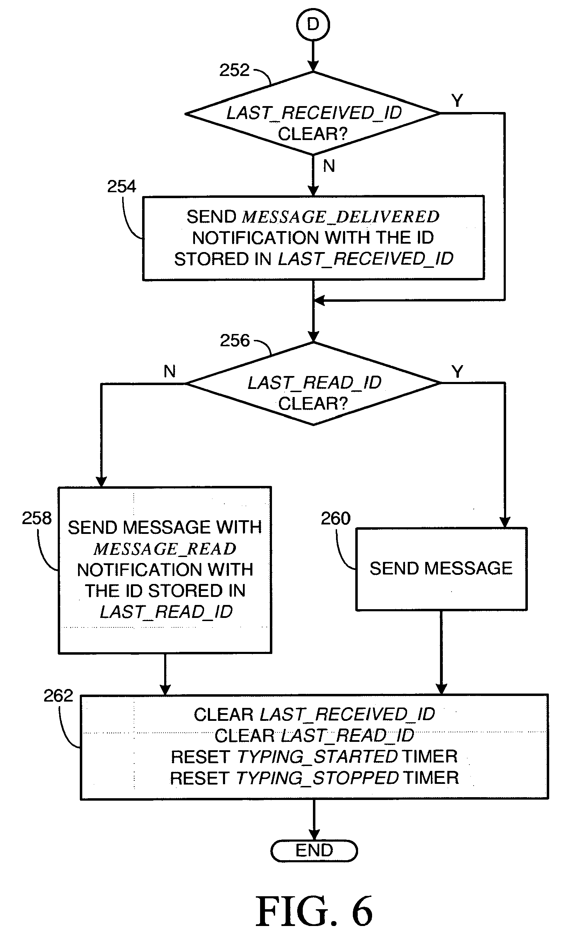

If event handler 141 recognizes at 210 an activation of device 102 that corresponds to the user sending a message, the method continues to 252 at Figure 6. If *Last_Received_ID* contains an ID number of a message, then at 254, IM client 140 may send a *Message_Delivered* notification including the ID number that is stored in *Last_Received_ID.* It is rather unlikely that *Last_Received_ID* will contain an ID number of a message at this point, since it is unlikely that the user of device 102 will have replied to the most recently received message without having read it. At 256, IM client 140 checks whether *Last_Read_ID* contains an ID number of a message. If *Last_Read_ID* contains an ID number of a message, then at 258, IM client 140 may send the response to the received message combined with a *Message_Read* notification that includes the ID number that is stored in *Last_Read_ID.* If *Last_Read_ID* is cleared, then at 260 IM client 140 may send just the response to the received message. At 262, IM client 140 clears *Last_Received_ID* and *Last_Read_ID* to zero, and clears *Typing_Started_Timer* and *Typing_Stopped_Timer.*

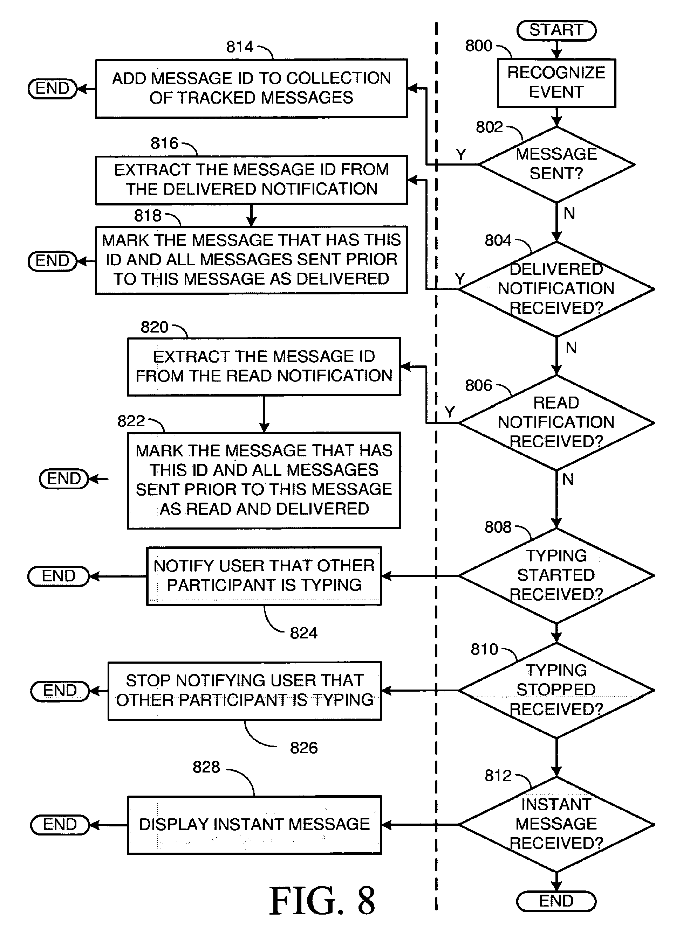

Figure 8 is a flowchart of an exemplary method implemented by IM client 140 on a communication device sending one or more IM messages, for example device 104, according to some embodiments of the invention.

At 800, IM client 140 recognizes that an event occurred at device 104. The recognized event may be sending a message, receiving a *Message_Delivered* notification, receiving a *Message_Read* notification, receiving a *Typing_Started* notification, receiving a *Typing_Stopped* notification, or receiving an instant message, as shown at 802, 804, 806, 808, 810 and 812, respectively.

IM client 140 track messages included in a conversation. If event handler 141 recognizes at 802 that a message was sent, then at 814, IM client 140 stores the ID number of the sent message. IM client 140 stores ID numbers of sent messages such that the order in which the messages were sent is traceable.

If event handler 141 recognizes at 804 that a *Message_Delivered* notification was received, then at 816, IM client 140 extracts the ID number of a message embedded in the *Message_Delivered* notification. At 818, IM client 140 compares the extracted ID number to the collection of tracked messages, and marks the message that has this ID number as delivered. IM client 140 marks also messages of that conversation that were sent prior to the newly marked message as delivered.

If event handler 141 recognizes at 806 that a *Message_Read* notification was received, then at 820, IM client 140 extracts the ID number of a message embedded in the *Message_Read* notification. At 822, IM client 140 compares the extracted ID number to the collection of tracked messages, and marks the message that has this ID number as read and delivered. IM client 140 marks also messages of that conversation that were sent prior to the newly marked message as read and delivered.

If event handler 141 recognizes at 808 that a *Typing_Started* notification was received, then at 824, IM client 140 may notify the user of device 104 that the other participant in the IM conversation is typing. If event handler 141 recognizes at 810 that a *Typing_Stopped* notification was received, then at 826, IM client 140 may stop notifying the user of device 104 that the other participant in the IM conversation is typing.

If event handler 141 recognizes at 812 that device 104 has received an instant message, then at 828, IM client 140 may display the received instant message to the user of device 104.

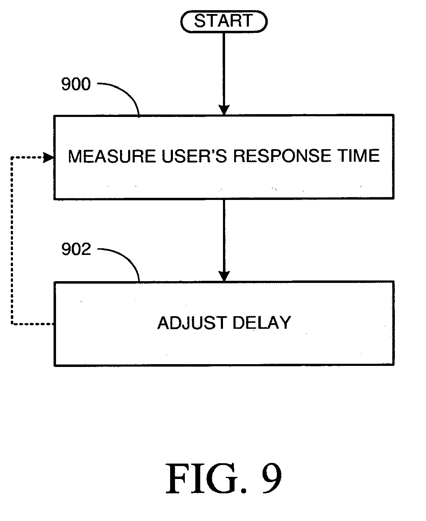

Figure 9 is flowchart of an exemplary simplified method implemented by IM client 140 to optimize values of values *Notification_Value, Typing_Started_Value* and *Typing_Stopped_Value,* according to some embodiments of the invention. The value *Notification_Value* can be selected as a fixed value corresponding to a time delay of, for example, 1-10 seconds.

However, different users have different typical response times and accordingly, the time delays can be configured for specific users. If the time delay is shorter than the typical response time of a particular user, it is likely that in most occasions *Message_Delivered* notifications will be sent. If the time delay is longer than the typical response time of a particular user, *Message_Delivered* notifications will likely not be sent, however, there will be an unreasonable delay until the other user receives the *Message_Read* notifications.

At 900, IM client 140 may measure the user typical response time. The measurement may be done over a period of time and the result according to which IM client 140 adjusts the values at 902 may be, for example, the maximum, minimum, median or average of all measurements, or any other suitable result. Optionally, the method may return to 900 to continue measuring the user's response time.

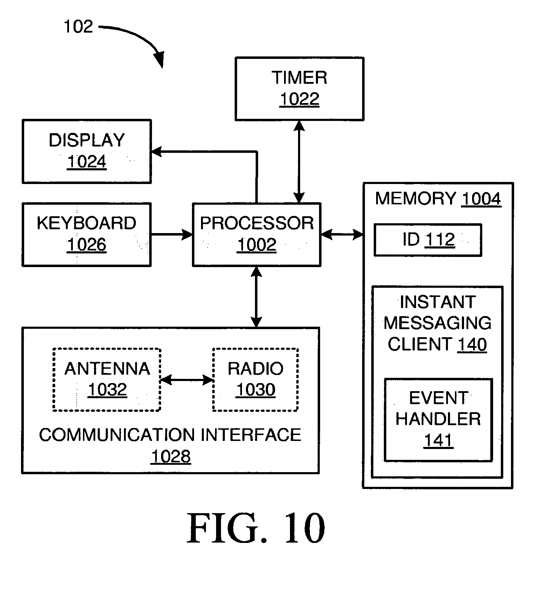

Figure 10 is a simplified functional block diagram illustration of an exemplary device, for example, device 102, according to some embodiments of the invention. For clarity, some components and features of device 102 are not shown in FIG. 10 and are not described explicitly below. It will be understood that components, modules and coupling elements described in FIG. 10 are functional representations, and that an implementation of device 102 may take any suitable physical form.

For example, two items shown and discussed separately in FIG. 10 may have overlapping parts in a physical implementation or one may be fully embedded in the other. Coupling elements are usually not discussed, and may be implemented using any suitable combination of semiconductor elements, metallic elements, discrete components, wires, optical fibers, connectors, printed circuit boards (PCB), waveguides, open air, and any other suitable elements. Moreover, items shown in FIG. 10 may be physically placed in the same or different enclosures, the same or different PCBs, and/or the same or different semiconductor devices.

Device 102 includes a processor 1002 and a memory 1004 coupled to processor 1002. Memory 1004 stores the unique identifier 112 of device 102 in the IM community, and also stores IM client 140 or the software portion thereof.

Device 102 includes a display 1024 and a keyboard 1026, both coupled to processor 1002, and may include additional user interface components that are not shown in Figure 10. Keyboard 1026 may be embedded in full or in part within display 1024, i.e. display 1024 may be a "touch screen". A timer 1022 may be controlled by processor 1002, and may be implemented by software, by hardware or by any combination thereof. Timer 1022 may participate in decrementing any of *Notification_Timer, Typing_Start_Timer* and/or *Typing_Stopped_Timer* at constant rate.

Device 102 includes a communication interface 1028, coupled to processor 1002, that is able to communicate with network 120. If network 120 is a cellular network or any other type of wireless network, communication interface 1028 may include a radio 1030 and an antenna 1032. Otherwise, if network 120 is a wired network, communication interface 1028 may include other interfacing elements suitable to interact with network 120.

A non-exhaustive list of examples for processor 1002 includes a microprocessor, a microcontroller, a central processing unit (CPU), a digital signal processor (DSP), a reduced instruction set computer (RISC), a complex instruction set computer (CISC) and the like. Furthermore, processor 1002 may comprise more than one processing unit, may be part of an application specific integrated circuit (ASIC) or may be a part of an application specific standard product (ASSP).

Memory 1004 may be fixed in or removable from device 102. Memory 1004 may be coupled to processor 1002 or partly embedded in processor 1002. A non-exhaustive list of examples for memory 1004 includes any combination of the following:
a) semiconductor devices such as registers, latches, read only memory (ROM), mask ROM, electrically erasable programmable read only memory devices (EEPROM), flash memory devices, non-volatile random access memory devices (NVRAM), synchronous dynamic random access memory (SDRAM) devices, RAMBUS dynamic random access memory (RDRAM) devices, double data rate (DDR) memory devices, static random access memory (SRAM), universal serial bus (USB) removable memory, and the like;
b) optical devices, such as compact disk read only memory (CD ROM), and the like; and
c) magnetic devices, such as a hard disk, a floppy disk, a magnetic tape, and the like.

A non-exhaustive list of examples for antenna 1032 includes a dipole antenna, a monopole antenna, a multilayer ceramic antenna, a planar inverted-F antenna, a loop antenna, a shot antenna, a dual antenna, an omnidirectional antenna and any other suitable antenna.

A non-exhaustive list of examples for wireless communication standards with which communication interface 1028 may communicate with network 120 includes Bluetooth®, Zigbee^{™}, ultra wideband (UWB), and related or future standards.

Alternatively, communication interface 1028 may comply with one or more of the IEEE 802.11 standards, WiFi Multi Media (WMM), and related or future standards.

It will be obvious to those of ordinary skill in the art how to modify the embodiments described above to suit an instant messaging system supporting *Message_Delivered* notifications but not supporting any *Message_Read* notifications. Similarly, it will be obvious to those of ordinary skill in the art how to modify the embodiments described above to suit an instant messaging system supporting *Message_Read* notifications but not supporting any *Message_Delivered* notifications.

It will also be obvious to those of ordinary skill in the art how to modify the embodiments described above to suit an instant messaging system in which the network delivers communications out of order. In that case, a *Message_Read* or *Message_Delivered* notification must be sent for each message, but a *Message_Read* notification may still be treated as an implied *Message_Delivered* notification.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

## Claims

1. A method in a first communication device (102, 104, 106) for reducing communications in an instant messaging conversation between said first device (102, 104, 106) and a second communication device (102, 104, 106), the method being **characterised by** :
delaying sending to said second device (102, 104, 106) a notification about an event at said first device (102, 104, 106) related to an instant message of said instant messaging conversation; and
if a communication related to said instant message is sent by said first device (102, 104, 106) to said second device (102, 104, 106) within a predetermined time after said event, not sending said notification to said second device (102, 104, 106).

2. The method of claim 1, wherein said event is the starting or stopping of input of said instant message by a user of the first device (102, 104, 106) and said communication is said instant message itself.

3. The method of claim 1, wherein said event is that said instant message was delivered to said first device (102, 104, 106) and said communication is a notification that a user of said first device (102, 104, 106) has read said instant message.

4. A method in a first communication device (102, 104, 106) for reducing communications in an instant messaging conversation between said first device (102, 104, 106) and a second communication device (102, 104, 106), the method **characterised by** :
delaying sending to said second device (102, 104, 106) a notification about a first event at said first device (102, 104, 106) related to an instant message of said instant messaging conversation; and
if a second event of said instant messaging conversation occurs at said first device (102, 104, 106) within a predetermined time after said first event, sending in a single communication from said first device (102, 104, 106) to said second device (102, 104, 106) a notification of said first event and said second event, otherwise sending said notification about said first event to said second device (102, 104, 106) in a communication that does not include a notification of said second event.

5. The method of claim 4, wherein said first event is that said instant message was read by a user of said first device (102, 104, 106) and said second event is that said user started input of another instant message of said instant messaging conversation.

6. The method of claim 4, wherein said first event is that said instant message has been delivered to said first device (102, 104, 106) and said second event is that a user of said first device (102, 104, 106) started input of another instant message of said instant messaging conversation.

7. The method of claim 4, wherein said first event is that said instant message has been read by a user of said first device (102, 104, 106), said second event is that another instant message of said instant messaging conversation is ready to be sent by said first device (102, 104, 106), and said single communication comprises said other instant message and said notification of said first event.

8. A computer-readable medium having computer-executable instructions for causing a computer device to perform the method of any one of claims 1 to 7.

9. A communication device (102, 104, 106) comprising:
a processor (1002);
a display (1024) coupled to said processor (1002);
a keyboard (1026) coupled to said processor (1002);
a timer (1022) in communication with said processor (1002);
a communication interface (1028) capable of communicating with a cellular network (120, 130) and coupled to said processor (1002), where said communication device (102, 104, 106) is able to communicate with another communication device (102, 104, 106) by way of said communication interface (1028) and said cellular network (120, 130); and
a memory (1004) coupled to the processor (1002), said memory (1004) arranged to store code (141) which, when executed by said processor (1002), is arranged to cause said communication device (102, 104, 106) to perform the method of any of claims 1 to 7.

## Patentansprüche

1. Ein Verfahren in einer ersten Kommunikationsvorrichtung (102, 104, 106) zum Verringern der Kommunikation in einer Sofortnachrichtenkonversation zwischen der ersten Vorrichtung (102, 104, 106) und einer zweiten Kommunikationsvorrichtung (102, 104, 106), wobei das Verfahren **gekennzeichnet ist durch**:
das Verzögern des Sendens an die zweite Vorrichtung (102, 104, 106) einer Benachrichtigung über ein Ereignis an der ersten Vorrichtung (102, 104, 106) im Zusammenhang mit einer Sofortnachricht der Sofortnachrichtenkonversation; und
wenn eine Kommunikation im Zusammenhang mit der Sofortnachricht innerhalb einer vorgegebenen Zeit nach dem Ereignis von der ersten Vorrichtung (102, 104, 106) an die zweite Vorrichtung (102, 104, 106) gesendet wird, das Nichtsenden der Benachrichtigung an die zweite Vorrichtung (102, 104, 106).

2. Das Verfahren gemäß Anspruch 1, bei dem das Ereignis das Beginnen oder Beenden der Eingabe der Sofortnachricht durch einen Benutzer der ersten Vorrichtung (102, 104, 106) ist und die Kommunikation die Sofortnachricht selbst ist.

3. Das Verfahren gemäß Anspruch 1, bei dem das Ereignis darin besteht, dass die Sofortnachricht an die erste Vorrichtung (102, 104, 106) zugestellt wurde, und die Kommunikation eine Benachrichtigung ist, dass ein Benutzer der ersten Vorrichtung (102, 104, 106) die Sofortnachricht gelesen hat.

4. Ein Verfahren in einer ersten Kommunikationsvorrichtung (102, 104, 106) zum Verringern der Kommunikation in einer Sofortnachrichtenkonversation zwischen der ersten Vorrichtung (102, 104, 106) und einer zweiten Kommunikationsvorrichtung (102, 104, 106), wobei das Verfahren **gekennzeichnet ist durch**:
das Verzögern des Sendens an die zweite Vorrichtung (102, 104, 106) einer Benachrichtigung über ein erstes Ereignis an der ersten Vorrichtung (102, 104, 106) in Bezug auf eine Sofortnachricht der Sofortnachrichtenkonversation; und
wenn ein zweites Ereignis der Sofortnachrichtenkonversation innerhalb einer vorgegebenen Zeit nach dem ersten Ereignis an der ersten Vorrichtung (102, 104, 106) eintritt, das Senden in einer einzelnen Kommunikation von der ersten Vorrichtung (102, 104, 106) an die zweite Vorrichtung (102, 104, 106) einer Benachrichtigung von dem ersten Ereignis und dem zweiten Ereignis, andernfalls das Senden der Benachrichtigung über das erste Ereignis an die zweite Vorrichtung (102, 104, 106) in einer Kommunikation, die keine Benachrichtigung vom zweiten Ereignis beinhaltet.

5. Das Verfahren gemäß Anspruch 4, bei dem das erste Ereignis darin besteht, dass die Sofortnachricht von einem Benutzer der ersten Vorrichtung (102, 104, 106) gelesen wurde, und das zweite Ereignis darin besteht, dass der Benutzer mit der Eingabe einer weiteren Sofortnachricht der Sofortnachrichtenkonversation begonnen hat.

6. Das Verfahren gemäß Anspruch 4, bei dem das erste Ereignis darin besteht, dass die Sofortnachricht an die erste Vorrichtung (102, 104, 106) zugestellt wurde, und das zweite Ereignis darin besteht, dass der Benutzer der ersten Vorrichtung (102, 104, 106) mit der Eingabe einer weiteren Sofortnachricht der Sofortnachrichtenkonversation begonnen hat.

7. Das Verfahren gemäß Anspruch 4, bei dem das erste Ereignis darin besteht, dass die Sofortnachricht von einem Benutzer der ersten Vorrichtung (102, 104, 106) gelesen wurde, das zweite Ereignis darin besteht, dass eine weitere Sofortnachricht der Sofortnachrichtenkonversation zum Senden durch die erste Vorrichtung (102, 104, 106) bereit ist, und die einzelne Kommunikation die weitere Sofortnachricht und die Benachrichtigung vom ersten Ereignis umfasst.

8. Ein durch Computer lesbares Medium, das durch Computer ausführbare Anweisungen enthält, durch die eine Computervorrichtung zum Durchführen des Verfahrens gemäß einem der Ansprüche 1 bis 7 veranlasst wird.

9. Eine Kommunikationsvorrichtung (102, 104, 106), die umfasst:
einen Prozessor (1002);
eine mit dem Prozessor (1002) gekoppelte Anzeige (1024);
eine mit dem Prozessor (1002) gekoppelte Tastatur (1026);
einen mit dem Prozessor (1002) in Kommunikation befindlichen Zeitgeber (1022);
eine Kommunikationsschnittstelle (1028), die zum Kommunizieren mit einem Mobilfunknetz (120, 130) in der Lage und mit dem Prozessor (1002) gekoppelt ist, wobei die Kommunikationsvorrichtung (102, 104, 106) in der Lage ist, mittels der Kommunikationsschnittstelle (1028) und des Mobilfunknetzes (120, 130) mit einer anderen Kommunikationsvorrichtung (102, 104, 106) zu kommunizieren; und
einen Speicher (1004), der mit dem Prozessor (1002) gekoppelt ist, wobei der Speicher (1004) für das Speichern von Code (141) eingerichtet ist, der, wenn er vom Prozessor (1002) ausgeführt wird, dazu eingerichtet ist, die Kommunikationsvorrichtung (102, 104, 106) zu veranlassen, das Verfahren gemäß einem der Ansprüche 1 bis 7 durchzuführen.

## Revendications

1. Procédé, dans un premier dispositif de communication (102, 104, 106), de réduction de communications dans une conversation de messagerie instantanée entre ledit premier dispositif (102, 104, 106) et un deuxième dispositif de communication (102, 104, 106), le procédé étant **caractérisé par** les étapes suivantes :
le retardement de l'envoi audit deuxième dispositif (102, 104, 106) d'une notification concernant un événement au niveau dudit premier dispositif (102, 104, 106) relatif à un message instantané de ladite conversation de messagerie instantanée ; et
si une communication relative audit message instantané est envoyée par ledit premier dispositif (102, 104, 106) audit deuxième dispositif (102, 104, 106) au cours d'une durée prédéfinie après ledit événement, le non envoi de ladite notification audit deuxième dispositif (102, 104, 106).

2. Procédé selon la revendication 1, dans lequel ledit événement est le commencement ou l'arrêt de la saisie dudit message instantané par un utilisateur du premier dispositif (102, 104, 106) et ladite communication est ledit message instantané lui-même.

3. Procédé selon la revendication 1, dans lequel ledit événement est le fait que ledit message instantané a été transmis audit premier dispositif (102, 104, 106) et que ladite communication est une notification de la lecture dudit message instantané par un utilisateur dudit premier dispositif (102, 104, 106).

4. Procédé, dans un premier dispositif de communication (102, 104, 106), de réduction de communications dans une conversation de messagerie instantanée entre ledit premier dispositif (102, 104, 106) et un deuxième dispositif de communication (102, 104, 106), le procédé étant **caractérisé par** les étapes suivantes :
le retardement de l'envoi audit deuxième dispositif (102, 104, 106) d'une notification concernant un premier événement au niveau dudit premier dispositif (102, 104, 106) relatif à un message instantané de ladite conversation de messagerie instantanée ; et
si un deuxième événement de ladite conversation de messagerie instantanée survient au niveau dudit premier dispositif (102, 104, 106) au cours d'une durée prédéfinie après ledit premier événement, l'envoi, dans une communication unique en provenance dudit premier dispositif (102, 104, 106) et à destination dudit deuxième dispositif (102, 104, 106), d'une notification dudit premier événement et dudit deuxième événement, ou alors l'envoi de ladite notification concernant ledit premier événement audit deuxième dispositif (102, 104, 106) dans une communication qui n'inclut pas une notification dudit deuxième événement.

5. Procédé selon la revendication 4, dans lequel ledit premier événement est le fait que ledit message instantané a été lu par un utilisateur dudit premier dispositif (102, 104, 106) et ledit deuxième événement est le fait que ledit utilisateur a commencé la saisie d'un autre message instantané de ladite conversation de messagerie instantanée.

6. Procédé selon la revendication 4, dans lequel ledit premier événement est le fait que ledit message instantané a été transmis audit premier dispositif (102, 104, 106) et ledit deuxième événement est le fait qu'un utilisateur dudit premier dispositif (102, 104, 106) a commencé la saisie d'un autre message instantané de ladite conversation de messagerie instantanée.

7. Procédé selon la revendication 4, dans lequel ledit premier événement est le fait que ledit message instantané a été lu par un utilisateur dudit premier dispositif (102, 104, 106), ledit deuxième événement est le fait qu'un autre message instantané de ladite conversation de messagerie instantanée est prêt à être envoyé par ledit premier dispositif (102, 104, 106) et ladite communication unique comprend ledit autre message instantané et ladite notification dudit premier événement.

8. Support lisible par ordinateur présentant des instructions pouvant être exécutées par ordinateur afin d'amener un dispositif informatique à mettre en oeuvre le procédé selon l'une quelconque des revendications 1 à 7.

9. Dispositif de communication (102, 104, 106) comprenant :
un processeur (1002) ;
un écran (1024) associé audit processeur (1002) ;
un clavier (1026) associé audit processeur (1002) ;
une horloge (1022) en communication avec ledit processeur (1002) ;
une interface de communication (1028) pouvant communiquer avec un réseau cellulaire (102, 130) et associée audit processeur (1002), ledit dispositif de communication (102, 104, 106) pouvant communiquer avec un autre dispositif de communication (102, 104, 106) à l'aide de ladite interface de communication (1028) et dudit réseau cellulaire (120, 130) ; et
une mémoire (1004) associée au processeur (1002), ladite mémoire (1004) pouvant stocker du code (141) qui, lorsqu'il est exécuté par ledit processeur (1002), peut amener ledit dispositif de communication (102, 104, 106) à mettre en oeuvre le procédé selon l'une quelconque des revendications 1 à 7.
